# EUROPEAN PATENT APPLICATION

(11) **EP 2 963 853 A1**
(43) Date of publication of application: **06.01.2016**
(21) Application number: 14175044.8
(22) Date of filing: 30.06.2014
(51) Int. Cl.: H04L 9/00, H04L 9/08

(54) **Method for transporting large amounts of electronic data**

(71) Applicant: Quantum Trains International B.V., 7335 DS Apeldoorn (NL)
(72) Inventor: Chevtchenko, Oleg Alexander, 2901 HG Capelle aan den IJssel (NL); Bakker, Ralph, 7335 DS Apeldoorn (NL); Shevchenko, AlexandrAlexandrovich, 04211 Kyiv (UA); Oster, Daryl G., Longmont Colorado, CO Colorado 80504 (US)
(74) Representative: 't Jong, Bastiaan Jacob

(57) **Abstract**

The invention relates to a method for transporting large amounts of electronic data, which method comprises the steps of:
- converting the electronic data in at least a first and a second data part at a first location;
- storing at least the first data part on a first physical storage medium at said first location;
- transporting the first physical storage medium to a second location;
- separately receiving the second data part at the second location; and
- reconstructing the electronic data out of the at least first and second data parts.

## Description

The invention relates to a method for transporting large amounts of electronic data, including information, knowledge and experience, etc. of any sort: such as wisdom and insight, or any other message, sign, script, image, video, film, scan, 3-D or more-D model, virtual reality data, etc. resolving uncertainty of any kind, or touching senses or emotions in any way, etc.. Said data can be in e.g., electronic, magnetic, electro-magnetic, optical, quantum, or electrolytic form or their combination; altogether called here: electronic data.

Modern humans are in constant need for more data and information, since it allows them to have better control of more events, to perform actions more efficiently, to save time, to take more adequate decisions, show in a right place at the right time, etc. This is why Internet develops so rapidly (wireless, optical fiber, TV cable, wire, etc.).

The ability of humans to process information is amazing. Daily, human eyes follow reality that often provides a flow of visual information at almost unlimited speed. One can estimate this ability by noticing that a human can effortlessly follow the highest quality video and thus is capable of processing essentials of the information flow at 48 Gb/s, (270 TB/hour, or 2.2 PB/day of 8 hours or 15.4 PB/week of 56 hours of uncompressed 8k UHD format). Even of outstanding quality, such videos are just pale approximations of reality, as they contain only visual and audio information, while many of other features present in the original are lost (e.g., we cannot touch or smell the visualized object).

On the other hand, the ability of an average internet user to receive and transmit information is at present limited to about 10-100 Mb/s (4.5-45 GB/hour can be in theory transmitted and stored). The speed is 60 thousand times lower of what a human could easily process. With this speed it takes at least 22 hours to download e.g., 1 TB of data, such as an 8k movie even with a quality being already compromised by compression. Furthermore, because of the various limitations (such as data limits imposed by the internet service providers) in practice this allows users to process just a few TB/year at the relatively high corresponding costs (250 US$/TB) of about 750 US$/year for a typical internet connection.

In order to increase the transfer speed of an internet connection of a user, one could add to an existing connection one or more similar connections, to achieve higher speeds. However, the costs will increase proportionally. Although the transfer speed of a single user can be increased easily, the backbones of the internet are used collectively by multiple users and therefore have still some limitations, which would stop a speed increase for the majority of users. In particular the intercontinental data connections are limited and would prevent a substantial speed increase for the majority of users, while adding new intercontinental data connections would involve considerable costs. Therefore, a typical user can enjoy transfer rates of 10-100 Mb/s only within limited amount of time, and in reality consumes only 5-20 GB of data per day.

And, for a user wishing to process larger volumes of information (e.g., 10²-10⁵ TB/year), current situation creates an obstacle of high corresponding costs.

Data consumed by users is not always required to be instantly available. For example, a lot of data is already stored on a server somewhere on the internet and is sent to a user only after a request for this data. For example, a movie is not directly transferred to a user as soon as it becomes available, but only after a user has decided that he or she would like to see that particular movie. Also, a lot of webpage content is available, which is not transferred to a user almost directly after creation, but only after the request of a user. Such information could for example already be available during a number of days, weeks, months or even years.

On the other hand, other data is expected to be available almost directly upon creation, such as emails, news items, telephone conversations (VOIP) and the like.

So, data on the internet can be divided into two flows. The first flow can contain, but not limited to communications, urgent information (e.g., business or weather data, etc.), streaming movies, etc. The second flow can contain e.g., files relevant to web cache, such as e.g. temporary internet files; movies (e.g., 4k UHD format), holograms, or other less urgent information that does not require an immediate transmission, such as satellite images, outer and inner body scans or data sets for statistical use.

It is of course known to store data on a physical storage medium and to have the physical storage medium transferred to a user for further use. A physical storage medium can be: a hard disc drive, solid state drive, memory stick, memory card, flash memory, USB flash drive, DRAM, TRAM, Z-RAM, optical discs, holographic discs, etc.

However, especially with large amounts of electronic data it is not desired if unauthorized persons could access and/or copy the electronic data during the transport between the two locations. Although data send via the internet could also be accessed and/or copied by a third party, the chance that this would occur is substantially smaller due to the volatility of the data on the internet. The data is transferred from one location to the other location in a split second and will not remain long at one of the intermediate servers. If the data is stored on a physical storage medium and is transferred in a conventional way, for example with a courier, the data will be in transit during a substantially long time frame increasing the risk that third parties would hack into the data.

Also, with modern electronics (e.g., mobile phones) it becomes increasingly popular to record and share personal information and to create databases of life-time long personal experiences (LTLPE, where everything in life of an individual is recorded and stored). Thus, information prosumer emerges facing upload limitations of existing internet connections (for example, 700 million people living in Europe can produce LTLPE videos at a rate of 44,800 PB/day. When to assume that 50% of that is shared via internet, some 78 fiber optic cables will be required for this task alone, and corresponding cost burden will force each prosumer to pay yearly additional $5,840 (based on current typical costs) as delivery costs for this activity).

While in theory a digital signal should have a perfect quality, in reality quality of information delivered to a user through Internet at present remains an issue. In part this is caused by the limited speed of internet connection; the other reason is in congestion, when many users are online at the same time.

It is also known that copying information is usually less expensive, as compared to the producing of that information. Unfair users can benefit illegally redistributing copies of legally purchased pieces of information like software, music video data.

It is an object of the invention to reduce or even remove the above mentioned disadvantages.

This object is achieved with a method according to the invention, which method comprises the steps of:
- converting the electronic data in at least a first and a second data part at a first location;
- storing at least the first data part on a first physical storage medium at said first location;
- transporting the first physical storage medium to a second location;
- separately receiving the second data part at the second location; and
- reconstructing the electronic data out of the at least first and second data parts.

With the invention, the electronic data is converted into at least two parts, such that a data part on itself is useless, as the electronic data can only be retrieved again, after all the data parts are combined and the electronic data is reconstructed.

This provides for a substantial security as a data part present on a physical storage medium, is useless for other parties as long as they do not have access to the other data parts.

By ensuring that the at least two data parts are send separately, the chance that the data is accessed when in transit is substantially reduced.

With the method according to the invention, it is thus possible to transfer large amounts of electronic data with at least the same security as if the data would be sent via the internet. For example, a typical hard disc drive (HDD) with a capacity of 2 TB weighing 0.25 kg could be sent with conventional transporting means within two days from one side of the world to the other side of the world. And such transportation could occur e.g., daily. This would already result in a constant average data transfer of 12 MB/s, 2 TB/day, 730 TB/year, with no caps. And additional hard discs could be transferred easily within the same time frame, such that the average data transfer is easily multiplied. A small box (∼3 kg) can already easily contain a dozen of such hard discs. This also provides the possibility to offer the data to places in the world, which currently do not have access to the internet, or only at a very limited speed.

For example, a system of 60 cargo planes (such as Boeing 747F) following within 0.5 hours after each other and carrying 95 tons of HDD each could provide an information connection with the speed of 527 TB/s (100 times that of typical fiber optic cable), travel time of 14 hours (New York-Beijing) and the costs well under 10 $/TB. Further, the costs of 60 Boeing 747F are 16 B$; the costs of 100 of fiber optic cables are 60 B$. Obviously, with 50 hours between two planes the average speed of 5 TB/s will be achieved at comparable investment costs.

In a preferred embodiment of the method according to the invention the at least second data part is stored on a second physical storage medium at the first location and wherein the second physical storage medium is transported to the second location along a route different from the transportation route of the first physical storage medium.

By transporting the at least second data part along another route, the chance of interception of all data parts is reduced to virtually zero.

In yet another embodiment of the method according to the invention, the at least second data part is transferred to the second location via electronic means, such as the internet. Especially, when the data can be converted into a large first data part and a small second data part, it would increase security when the second data part is send via the internet due to the volatility of the network.

An example of the method could be that electronic data of part of the internet, such as a collection of movies, is transported with the method according to the invention from a location in for example the United States, to a location in Europe. This transported data can then be made available again to the internet on a server in Europe. This would substantially spare the costly intercontinental data connections. The data can also be made available again on a local network of a company or at home.

In a further preferred embodiment of the method according to the invention the step of converting the electronic data comprises the encryption of the electronic data and wherein the resulting at least second data part is a decryption key.

The conversion of the electronic data into at least two data parts can be done using known encryption algorithms using for example key pairs. This will ensure that a single data part will present part of the original electronic data and that only in combination with all the data parts, the original electronic data can be reconstructed.

Another possibility of converting the data is by storing of each double byte value of the electronic data, the higher byte on a first physical storage medium and the lower byte on a second physical storage medium. When even higher level of security is desired, this approach can be extended to e.g., storing of each of eight bytes plus one check byte on respectively first, second, etc. and ninth storage medium each using an independent delivery route.

In yet another embodiment of the method according to the invention the first physical storage medium comprises a controller for controlling the access of an external device, such as a computer, to the stored first data part.

Preferably, the controller comprises an exchangeable computer program.

Using a unique controller program for the first physical storage medium, one can erase the controller program after storing the electronic data on the storage medium. Then transport the storage medium to another location and send the unique controller program via an electronic network. When the storage medium arrives, the unique controller program can be again written into the controller of the storage medium, such that the storage medium can be accessed in a more conventional way.

In a further embodiment of the method according to the invention the first physical storage medium comprises at least two separable components, which are each separately transported to the second location. By dividing the storage medium into at least two separate parts, which are both required for the storage medium to function, a further security of the electronic data is obtained.

Preferably, the first physical storage medium comprises communication means for communication with a network, for example a mobile network. These communication means provide the possibility of tracking the first physical storage medium when in transit, for additional security.

It is further preferred when the communication means are connected to the controller. When the first storage medium is stolen by a third party, one could control the controller via the communication means to destroy the first data part on the storage medium, even though the first data part on its own would be useless. Another possibility is to provide geofencing functionality, such that the first storage medium is only activated when it is present at a predefined location.

In a final preferred embodiment of the method according to the invention at least the first physical storage medium is transported by an evacuated tube transport system. An evacuated tube transport system can transport physical parts at very high speeds, such that the transport of a first physical storage medium from one side of the world to the other side of the world would only take a few hours. Compared with the amount of data which could be transported on a single hard disc, while a capsule can contain dozens of hard discs, a data transfer speed of multiple times of the current maximum internet throughput can easily be obtained, at the fraction of the costs in $/TB. For example, an international transport by evacuated tube at speed 6500 km/hour has a capacity of 117 of capsules per second, each capsule can carry up to 1565 of such HDD (that is 3130 TB of information). The resulting theoretical speed limit for information is thus 366,210 TB/s (73,000 times more than for a typical fiber optic cable, 5 TB/s), travel time is 2 hours (New York to Beijing)and the costs are under 1 $/TB. Therefore, a typical 5 TB/s capacity of a fiber optic cable can be matched by the evacuated tube effectively used for transport of information only 7 minutes/year. And, when compared to the airplane, an evacuated tube connection provides greater information capacity, more sustainable, does not depend on fossil fuels, more energy efficient, faster, cheaper per TB of data, independent on weather, better controlled, more reliable, etc.

### Example of an embodiment of the invention

To compare with existing technology, a modern fiber optic cable e.g., from London, UK to East London, Africa (14000 km long) has a transmission capacity (data transfer rate) of 5,12·10³ Gbit/s and can deliver up to 2,02·10¹⁰ GB/year of data and costs 650 M$. The business around the cable is built so that the cable serves e.g., 5,12·10⁵ customers, each customer has a connection speed of 0,01 Gbit/s, pays 65 $/month (and is capable to theoretically receive up to 40 TB/year of data, when using connection full time. However caps often set a limit to e.g., 3 Tb/year).

A customer with 250 GB/month capacity limit can use his 10 Mbit/s connection at full capacity only for 55 hours/month (and for this reason has in fact lower speed averaged per month) and is capable to annually collect data that will fit in 1 1/2 hard discs with a standard capacity of 2 TB.

It should be noted that a demand for higher speed and higher data limit increase drastically when a user engages in activities such as streaming video or producing multimedia content. For instance activity such as downloading one high-definition film (8 GB) per day takes 2 hours and exhausts the full available capacity of the connection discussed above. In addition, the data cost for such customer are 260 $/TB (for a wire connection. In reality a customer often pays additional 1000 $/TB for mobile data with a download speed of 10 Mbit/s).

Furthermore, it should be noted that the population of Africa is currently over 1 billion people and it is likely to increase in the future, therefore it is fair to expect with time (perhaps 20 years) over 500 million of potential customers. Consequently, to satisfy these potential customers a 1000 of such fiber optic cables between London, UK and London, Africa may be needed, resulting in an investment in cables alone of 650 billion dollar. In addition to that, a demand in higher data transfer rate and higher capacity limits are rising fast and in 20 years it is fair to assume that at least 0.1 Gbit/s will be needed at a customer connection instead of 0.01 Gbit/s today (which would require respectively 10000 fiber optic cables and investment of 6.5 trillion dollar with technology of today).

In the following we assume that data transfer rate of fiber optic cable will increase at the same pace as data storage capacity for HDD and other storage means.

Using the method according to the invention, with storage means of today (such as 2 TB hard disc drive, HDD) one evacuated tube transport system capsule could carry an array of about 1530 HDD, with a data capacity of 3,13 ·10⁶ GB. Assuming that a global evacuated tube transport system network is in place and a capsule travels with a speed of 6500 km/h, the distance from London, UK to East London, Africa (14000 km) is covered in 2,2 hours (which is a delay of the data delivery in this case). In order to match the yearly data transfer capacity of the fiber optic cable as above, about 6500 capsule trips/year will be needed. Depending on the maximum capacity of the evacuated tube transport system the yearly transfer capacity of the fiber optic cable can be matched within a few minutes up to a few hours. For the rest of the time the evacuated tube transport system between these two cities can be used for transporting passengers, goods, water, energy, etc., thus creating very attractive new investment opportunities for the internet providers. In combination with evacuated tube delivery of data, any other way (to deliver tangible and intangible goods) that can be fully automated (e.g., drones, teleportation, the internet, TV cable) can be used.

Due to the massive data transport capacity of the method according to the invention, authentic quality of the data can be preserved and no compression methods are necessary as in contrast to transmission via fiber optics, TV or telephone cable, where the signal quality remains an issue.

Due to the massive data transport capacity of the method according to the invention, existing and planned Internet connections can be used more efficiently, e.g. by sending the large portion of the first data part (e.g., temporary internet files, videos, films, etc.) as proposed in this invention.

Due to the large portion of the data delivered rather independently from the internet (or other communication channel) with the proposed method according to the invention, better overall data and information security is possible (providing only authorized access, additional competitive ways to transmit large volumes of data that are more difficult to tap and lowering risks of uncontrolled distribution of information. This advantage of the proposed method has particular meaning for Europe, where the information security of the internet currently remains an issue as recently recognized.

Due to the relative independence and complementarity of the proposed method according to the invention, a higher overall reliability to deliver data, information, etc. is reached in case of unforeseen events, such as calamities, natural and human made disasters, etc.

Due to the lower transport costs of the method according to the invention, much larger volumes of information can be afforded by a prosumer (to compare: 250, 10 and 1 $/TB for fiber optic, airplane and evacuated tube delivery costs respectively)and therefore economic burden is removed for producing, using and sharing more information, data, knowledge and experiences.

For better quality of service realizing the proposed method according to the invention, a prosumer (sender or an addressee) can be interactively involved in the process of the data selection and details of the delivery and of access to said delivered data and information: what kind of data (first and second data parts) to be sent in what way, when, using which channels, in what volume per channel, with what quality, with what level of security, at what costs, to confirm receipt of the delivered information, of said keys, return of used mobile storage media, etc.

## Claims

1. Method for transporting large amounts of electronic data, which method comprises the steps of:
- converting the electronic data in at least a first and a second data part at a first location;
- storing at least the first data part on a first physical storage medium at said first location;
- transporting the first physical storage medium to a second location;
- separately receiving the second data part at the second location; and
- reconstructing the electronic data out of the at least first and second data parts.

2. Method according to claim 1, wherein the at least second data part is stored on a second physical storage medium at the first location and wherein the second physical storage medium is transported to the second location along a route different from the transportation route of the first physical storage medium.

3. Method according to claim 1, wherein the at least second data part is transferred to the second location via electronic means, such as the internet.

4. Method according to any of the preceding claims, wherein the step of converting the electronic data comprises the encryption of the electronic data and wherein the resulting at least second data part is a decryption key.

5. Method according to any of the preceding claims, wherein the first physical storage medium comprises a controller for controlling the access of an external device, such as a computer, to the stored first data part.

6. Method according to claim 5, wherein the controller comprises an exchangeable computer program.

7. Method according to any of the preceding claims, wherein the first physical storage medium comprises at least two separable components, which are each separately transported to the second location.

8. Method according to any of the preceding claims, wherein the first physical storage medium comprises communication means for communication with a network, for example a mobile network.

9. Method according to claim 5 and 8, wherein the communication means are connected to the controller.

10. Method according to any of the preceding claims, wherein at least the first physical storage medium is transported by an evacuated tube transport system.

11. Method according to any of the preceding claims, wherein the first physical storage medium comprises processing means for processing the first data part and wherein the processing of the first data part is performed during said transport.

12. Method according to any of the preceding claims, wherein the first data part comprises a vocabulary of a coding system, such as MPEG4, wherein the second data part comprises code according to a high level language, and wherein the vocabulary of a coding system and the code according to a high level language are combined during reconstruction of the electronic data.
